Europäisches Patentamt

**European Patent Office**

Office européen des brevets

(19)

(11) Publication number: **0 112 955**
A1

## (12) EUROPEAN PATENT APPLICATION

(21) Application number: **82830303.2**

(22) Date of filing: **20.12.82**

(51) Int. Cl.³: **B 23 D 31/00**

(43) Date of publication of application:
**11.07.84** Bulletin **84/28**

(84) Designated Contracting States:
AT BE CH DE FR GB IT LI NL SE

(71) Applicant: Ficco, Stefano
Via Cardinal Mistrangelo, 8
I-00167 Roma(IT)

(72) Inventor: Ficco, Stefano
Via Cardinal Mistrangelo, 8
I-00167 Roma(IT)

(74) Representative: Mascioli, Alessandro, Prof.Dr. et al,
c/o A.N.D.I. Associazione Nazionale degli Inventori Via Lima, 35
I-00198 Roma(IT)

(54) Longitudinal shear.

(57) Longitudinal shear able to contemporaneously perform the functions of a guillotine shears, but effecting cuts of different lengths, and of shears able to cut square, rectangular or any other geometric shape or size, in correspondence with the edges of the metal sheet, consisting of a blade 4 which during its descent cuts the sheet, while on ascent advances a carriage 2 joined to said blade 4 until, at the end of the upstroke, said carriage and said blade are advanced the length of the cut effected and said carriage 2 stops automatically while blade 4, in the next descent, performs a new cut of the desired length.

FIG.1

EP 0 112 955 A1

COMPLETE DOCUMENT

Longitudinal shear

FICCO Stefano, Via Cardinal Mistrangelo 8, Rome

The invention concerns a longitudinal shear able to effect cuts of different lengths as required, in metal sheets, preferably steel or aluminum.

Shear machines called guillotine shears are currently used, which effect cuts of the sheet along its entire length, with no possibility of adjusting the cut extension, as required in particular cases and processing.

Said guillotine shears, since they are generally very large, are not only extremely expensive but also suffer from the disadvantage that as required by the complete cut performed, a large quantity of waste is generated from the sheets being processed, thus increasing production costs.

Known technology also includes other shear machines which effect cuts in sheets, positioned in correspondence to the edges of the metal sheet, to prepare square or rectangular pieces with a maximum side length of approximately 10 centimeters.

The aim of the invention is the realization of a low cost and high yield shear machine which can contemporaneously perform the functions of guillotine shears, but effecting cuts of different lengths, and of shears able to cut square, rectangular or any other geometric shape or size, in correspondence with the edges of the metal sheets.

This aim is achieved with a longitudinal shear consisting of a blade which on descent cuts the sheet while on ascent advances a carriage to which said blade is connected in such a way that, when the upstroke ends, said carraige and said blade are advanced the length of the cut previously performed and then upon automatic engagement of an electro-magnetic clutch, said carriage stops, while the blade in the next descent can cut the sheet again, and so on up to the desired length.

The invention is shown in a purely exemplificative preferred embodiment in the attached drawings, which show:

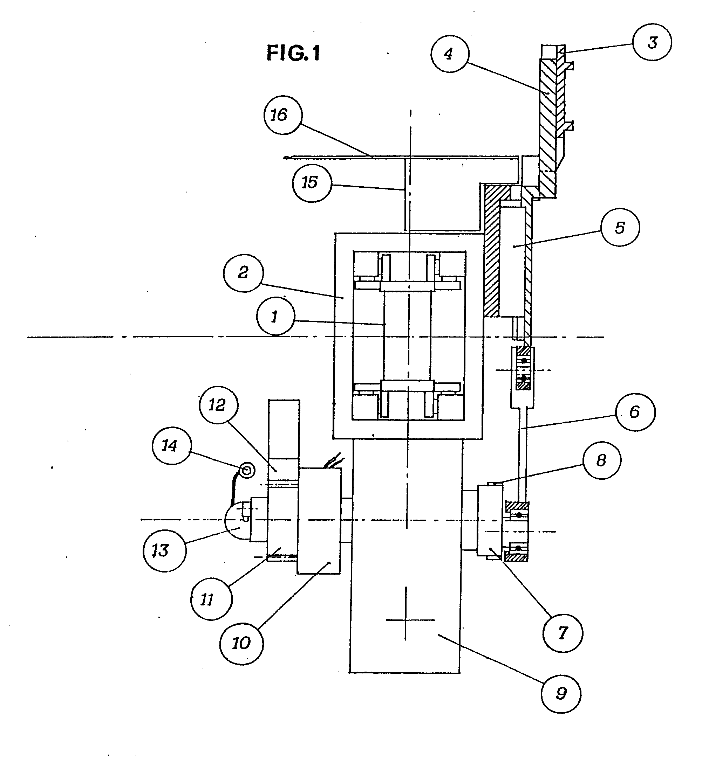

- figure 1, a cross section of the shear

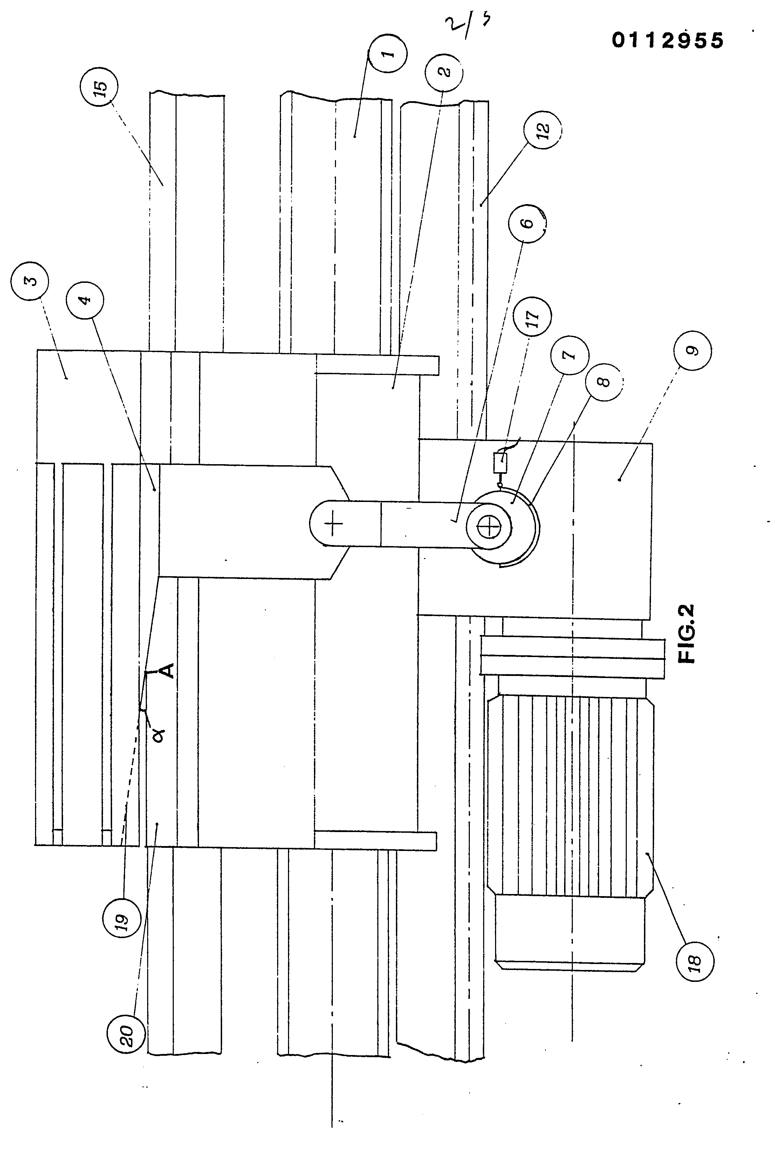

- figure 2, a front view

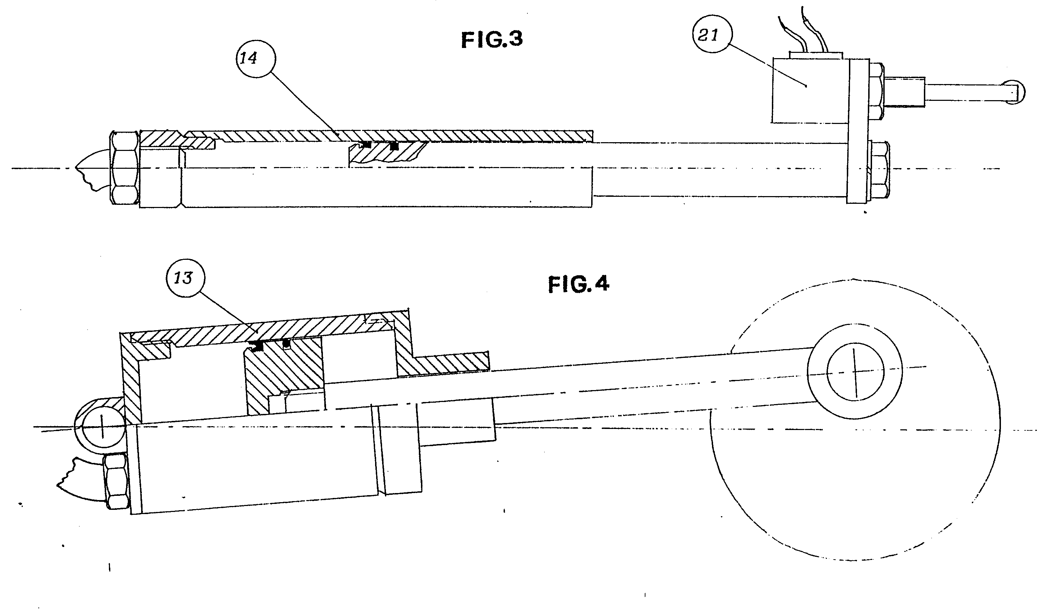

- figures 3 and 4, a partial cross section of the components of a particular reproducer of incremented harmonic motion, suitable for operation of the longitudinal shear.

The figures show in detail guide 1 for axial sliding of carriage 2, bearing shear blade 4, with side support 3 and guide 5 for said blade 4; rod 6, handle-bearing shaft 7, cam 8, reducer 9, electromagnetic clutch 10, cogged wheel 11, rack 12, primary hydraulic cylinder 13, secondary hydraulic cylinder 14, beam 15, forming part of the machine's framework, support plane 16 for the sheet to be cut, micro-switch 17, self-braking electric motor 18, mobile tool 19, fixed tool 20 and second micro-switch 21.

The invention functions as follows: motor 18 rotates the fast shaft of reducer 9; handle-bearing shaft 7 is mortised at the outlet of the slow shaft of the reducer; rod 6moves blade 4, which on descent cuts the sheet; on ascent cam 8 activates micro-switch 17 which inserts electromagnetic clutch 10, which being joined to the cogged wheel which meshes with rack 12, advances carriage 2; once ascent is completed, carriage 2 and so blade 4 connected to it is advanced the length of the cut performed previously and since when ascent is completed cam 8 by means of micro-switch 17 disengages electromagnetic clutch 10, carriage 2 is stopped, so blade 4 on its next descent cuts the sheet again, and so on up to a cut of the desired length.

Moreover, details 13 and 14, which together make up the reproducer of incremented harmonic motion, are designed to reproduce the harmonic motion of the intersection point A of the two tools 19 and 20.

This is necessary to stop carriage 2 and blade 4 once the cut length is reached, as entered from a numeric control board of known type.

The wheelbase of the two fixing openings of hydraulic cylinder 13 is equal to the length of rod 6. The arm of the handle which operates the shaft of the hydraulic cylinder is equal to the arm of the handle which controls rod 6.

In this way the movement of the piston of hydraulic cylinder 13 is equal to that of blade 4.

Since the angle $\alpha$ increases the movement of blade 4 by the quantity $X = 1/(\sin\alpha)$, the surface of the piston of cylinder 14 is X times smaller than the surface of the piston of hydraulic cylinder 13.

In this way the fluid moved by the piston of cylinder 13 advances the piston of cylinder 14 by a quantity X times greater than the displacement of piston 13, so micro-switch 21 moves through the same spaces as the intersection point A of blades 19 and 20.

Since micro-switch 21 opens the circuit which feeds self-braking motor 18, the latter stops at the instant in which micro-switch 21 hits the stop determined by the numeric control and so the length of the cut performed by blade 4 is that desired by the operator.

Of course, while the principle of the finding remains the same, the forms of realization and the details of construction may be varied widely from that described and

0112955

illustrated here without going beyond the bounds of this invention.

Claims

1. Longitudinal shear consisting of blade 4 which, when moved by rod 6, in descent, caused by motor 18 with reducer 9, cuts ;the sheet, while in ascent cam 8 activates micro-switch 17 which inserts electromagnetic clutch 10, which by means of cogged wheel 11 and rack 12, advances, by the length of the previous cut, carriage 2 connected to said blade 4, and, at the end of the ascent, said cam 8 by means of said micro-switch 17, disengages said electromagnetic clutch 10, and stops said carriage 2, so that said blade 4 can in the next descent cut the sheet again and so on, up to a cut of the desired length.

2. Longitudinal shear as claimed in claim 1 characterized by the presence of a reproducer of incremented harmonic motion consisting of primary and secondary hydraulic cylinders 13 and 14 capable of reproducing the harmonic motion of the intersection point of tools 19 and 20, in order to stop carriage 2 and blade 4 once the length of the cut has been reached.

3. Longitudinal shear as claimed in claim 2 characterized by the fact that the wheelbase of the two fixing openings of hydraulic cylinder 13 is equal to the length of rod 6 and the arm of the handle which operates the shaft of the hydraulic cylinder is equal to the arm of the handle which controls rod 6 so that the movement of the piston of hydraulic cylinder 13 is equal to that of blade 4.

4. Longitudinal shear as claimed in claims 2 and 3 characterized by the fact that the angle $\alpha$ increases the movement of blade 4 by the quantity $X = 1 / (\sin \alpha)$, and so the surface of the piston of cylinder 14 is X times smaller than the surface of the piston of hydraulic cylinder 13, so that the fluid moved by the piston of cylinder 13 advances the piston of cylinder 14 by a quantity X times greater than the displacement of piston 13, so micro-switch 21 moves through the same spaces as the intersection A of blades 19 and 20 and, opening the circuit which feeds self-braking motor 18, the latter stops at the instant in which micro-switch 21 hits the stop determined by the numeric control and so the length of the cut performed by blade 4 is that desired by the operator.

FIG.1

**FIG.2**

**FIG.3**

(14)

(21)

**FIG.4**

(13)

3/3

0112955

European Patent
Office

**EUROPEAN SEARCH REPORT**

EP 82 03 0308

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| Y | FR-A-2 240 068 (SCHLOEMANN-SIEMAG) * Whole document * | 1 | B 23 D 31/00 |
| Y | GB-A-1 215 242 (WALLIS) * Whole document * | 1 | |
| T | EP-A-0 071 537 (PONS) | | |
| A | FR-A-1 556 420 (MOELLER UND NEUMANN) | | |
| A | US-A-3 579 989 (STARK) | | TECHNICAL FIELDS SEARCHED (Int. Cl. ³) |
| | | | B 23 D B 26 D B 21 D |

The present search report has been drawn up for all claims

| Place of search THE HAGUE | Date of completion of the search 29-03-1984 | Examiner BERGHMANS H.F. |
|---|---|---|